# EUROPÄISCHE PATENTSCHRIFT

(11) **EP 0 476 356 B1**
(45) Veröffentlichungstag und Bekanntmachung des Hinweises auf die Patenterteilung: **05.01.1994**
(21) Anmeldenummer: 91114213.1
(22) Anmeldetag: 24.08.1991
(51) Int. Cl.: B60N 2/00, H01H 3/14

(54) **Sitzbelegungs-Schalteinrichtung für Kraftfahrzeuge**
Seat occupation switching device for automotive vehicles
Dispositif pour surveiller l'occuparion d'un siège de véhicules automobiles

(30) Priorität: 19.09.1990 DE 4029683
(43) Veröffentlichungstag der Anmeldung: 25.03.1992
(73) Patentinhaber: Bayerische Motoren Werke Aktiengesellschaft, 80788 München (DE)
(72) Erfinder: Lamberty, Hans, W-8000 München 50 (DE); Weishaupt, Walter, W-8000 München 50 (DE)

(56) Entgegenhaltungen:
- DE-A- 2 846 371
- DE-C- 934 022
- US-A- 4 060 705
- US-A- 4 446 345
- DE-C-3 711 677

## Beschreibung

Die Erfindung bezieht sich auf eine Sitzbelegungs-Schalteinrichtung nach dem Oberbegriff des Patentanspruchs 1.

Derartige Schalteinrichtungen sind in vielfältiger Weise bekannt. Allen Einrichtungen gemeinsam ist die Wirkungsweise: Bei einer Sitzbelegung wird dabei einmalig ein entsprechendes Signal, bei Verlassen des Sitzes ebenfalls einmalig ein entsprechend anderes Signal erzeugt. Bedingt durch die mögliche unterschiedliche Belastung des Sitzes aufgrund des unterschiedlichen Körpergewichts der Fahrzeugbenutzer und der individuell unterschiedlichen Positionierung auf dem Fahrzeugsitz sind die Anforderungen sowohl in mechanischer als auch elektrischer bzw. schaltungstechnischer Art an die bekannten Schalteinrichtungen besonders hoch. Es muß unter allen Umständen gewährleistet sein, daß eine tatsächliche Sitzbelegung auch wirklich registriert wird.

Hinzu kommt ein zusätzliches Problem von Fahrzeugsitzen. Diese zeigen im Laufe der Zeit Alterungserscheinungen. Bedingt durch die nachlassende Elastizität der Fahrzeugsitze sinkt die Sitz-Oberfläche im Laufe der Zeit ab. Dadurch verringert sich auch der vorgesehene Schaltweg eines beispielsweise mechanischen Schalters, der unter der Sitzoberfläche im Sitzkörper angeordnet ist. Zwar ist es in diesem Zusammenhang bekannt (DE 3711677 C), diese Erscheinung durch eine selbsttätige Nachstelleinrichtung zu eliminieren. Doch erfordert dies einen erheblichen zusätzlichen mechanischen Aufwand.

Der Erfindung liegt die Aufgabe zugrunde, eine Sitzbelegungs-Schalteinrichtung der eingangs genannten Art zu schaffen, die mit geringem Aufwand unter allen Belastungsfällen auch über eine lange Betriebszeit hinweg ein sicheres und zuverlässiges Erkennen einer Sitzbelegung ermöglicht.

Die Erfindung löst diese Aufgabe durch die Merkmale des Patentanspruchs 1.

Durch die Verwendung des querkraftempfindlichen Kabels wird es möglich, eine Sitzbelegung an verschiedenen Stellen der Sitzoberfläche zu detektieren. Die Auswertung der Änderungen des Sensorausgangssignals liefert während der Dauer der Sitzbelegung eine Fülle von Sitzbelegungs-Informationssignalen, die jeweils detektiert und ausgewertet werden. Durch diese redundante Signalaufnahme ist es problemlos möglich, den Verlust eines einzelnen Schaltsignals, das sich bei einer reinen Schwarz-Weiß-Auswertung verhängnisvoll auswirken kann, problemlos zu verarbeiten. Die Sitzbelegung ist demnach nicht durch ein einmaliges Signal, sondern durch eine Reihe von Signalen zu erkennen, die auch während der Sitzbelegung erfaßt werden. Sie werden ausgelöst bei jeder nennenswerten Bewegung des Fahrzeugbenutzers. Diese Bewegung kann bewußt oder bedingt durch Relativbewegungen des Fahrzeugbenutzers infolge von Beschleunigungen des Kraftfahrzeugs vorgenommen werden. Je nach Empfindlichkeit des Sensors können damit bereits mikroskopische Verlagerungen des Fahrzeugbenutzers auf der Sitzoberfläche erfaßt werden.

Die Auswertung der Sitzbelegungs-Information kann beispielsweise für die Änderungen des Sensorausgangssignals vorgenommen werden, die einen bestimmten Schwellwert übersteigen. Dieser Schwellwert kann konstant oder adaptiv, beispielsweise entsprechend der Zahl der pro Zeiteinheit auftretenden Änderungen des Sensorausgangssignals gewählt sein. Es ist dann gewährleistet, daß innerhalb des jeweiligen Meßzeitraums bei einer Sitzbelegung eine vorgegebene Zahl von Sitzbelegungs-Informationen anliegt, während bei nicht gegebener Belegung die Zahl dieser Informationen gleich Null oder kleiner als der vorgegebene Wert ist. Durch diese Unterscheidung wird es möglich, eine tatsächliche Sitzbelegung sicher um wirksam zu erkennen und nachgeordnete Schalteinrichtungen, beispielsweise eine Auslöseschaltung für einen Airbag, einen Gurtstrammer oder auch eine Sitzheizung entsprechend anzusteuern.

Vorteilhafte Weiterbildungen der Erfindung beschäftigen sich mit der Anordnung und mit dem elektrischen Aufbau des Kabels. Sie sind Gegenstand der Patentansprüche 2 bis 4. Dabei wird mit den Merkmalen des Patentanspruchs
- 2: eine weitere Erhöhung der Erkennungssicherheit mit optimierter Kabellänge
- 3: eine vorteilhafte konstruktive Ausgestaltung und
- 4: ein einfacher elektrischer Aufbau

erreicht.

In der Zeichnung ist ein Ausführungsbeispiel der Erfindung dargestellt. Es zeigt
- Fig. 1: eine erfindungsgemäße Sitzbelegungs-Schalteinrichtung schematisiert für einen Kraftfahrzeug-Sitz von der Seite
- Fig. 2: die Einrichtung von Fig. 1 in der Draufsicht
- Fig. 3: den Aufbau des in der Schalteinrichtung verwendeten Sensors im Querschnitt
- Fig. 4: die schaltungstechnische Aufbereitung des gelieferten Sensorsignals und
- Fig. 5: ein Zeitdiagramm zur Erläuterung der Wirkungsweise der Einrichtung.

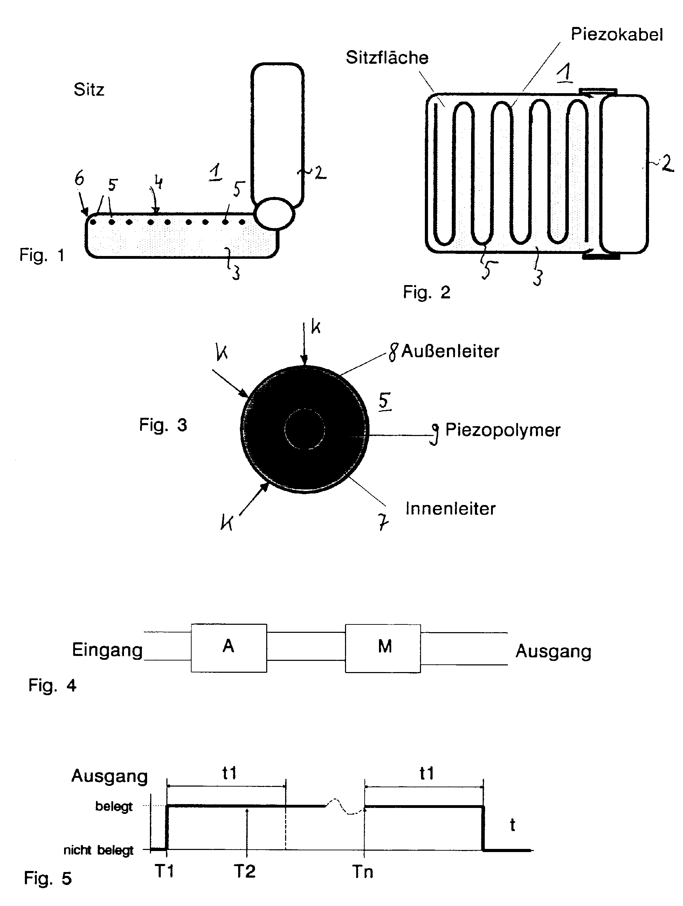

Der in den Figuren 1 und 2 schematisch dargestellte Sitz 1 eines Kraftfahrzeugs besteht im wesentlichen aus einem Oberteil 2 und einem Unterteil 3. In das Unterteil 3 ist im Bereich der Sitzoberfläche 4 ein querkraftempfindliches Kabel 5 mäanderförmig verlegt. Hierzu ist das Kabel 5 in den nicht dargestellten Sitzkörper eingeschäumt, der gegenüber dem Sitzrahmen (ebenfalls nicht dargestellt) durch nicht gezeigte elastische Elemente, beispielsweise Federn, abgestützt ist. Ebenfalls nicht dargestellt ist eine gegenüber der gezeigten Anordnung veränderte Geometrie des Kabels 5, das beispielsweise im Bereich einer höheren Sitzbeanspruchung (in der Nähe des Oberteils 2) dichter als im Bereich der Sitzvorderkante 6 verlegt ist.

Das Kabel 5 ist in Fig. 3 im Querschnitt gezeigt. Es besteht im wesentlichen aus einem elektrischen Innenleiter 7, einem elektrischen Außenleiter 8 und einem Piezopolymer 9 zwischen den Leitern 7 und 8. Ein derartiges Kabel ist querkraftempfindlich und liefert bei Einwirken einer veränderlichen Querkraft K an seinem Ausgang ein veränderliches Ausgangssignal. Dieser Ausgang befindet sich am Anfang bzw. Ende des Kabels 5 und ist nicht im einzelnen dargestellt. Das Ausgangssignal wird einer Auswerte-Schalteinrichtung zugeführt, die in Fig. 4 schematisch dargestellt ist.

Die Schalteinrichtung enthält im wesentlichen eine Aufbereitungsstufe A, in der das Sensorsignal verstärkt und über einen Schwellwertschalter geführt ist. Anschließend wird es auf den Eingang einer nachtriggerbaren Monoflop-Stufe M zugeführt. Die Nachtriggerzeit t₁ ist mit beispielsweise 2 Minuten angenommen.

Zu Beginn einer Sitzbelegung (T1, Fig.5) führt die Durchbiegung der Sitzoberfläche 4 zu einem veränderten Ausgangssignal des Sensorkabels 5, das das Monoflop M triggert. Das Monoflop liefert damit an seinem Ausgang für die Nachtriggerzeit t₁ ein geändertes Ausgangssignal. Dieses Ausgangssignal wird als Meldung für einen belegten Sitz ausgewertet. Durch die bewußten und unbewußten Bewegungen der sitzenden Person werden weitere Triggersignale, schematisch im Diagramm von Fig. 5 mit ihren jeweiligen Ereigniszeitpunkten T2 bis Tₙ bezeichnet, ausgelöst. Dadurch wird das Monoflop M, solange der Sitz belegt ist, jeweils nachgetriggert. Das Ausgangssignal bleibt damit auf den Wert, den es zu Beginn der Sitzbelegung (Zeitpunkt T₁) eingenommen hat.

Wird der Sitz verlassen, so liefert das Sensorkabel 5 ein konstantes Ausgangssignal, in der Regel vom Wert 0. Das Monoflop M wird dann nicht mehr nachgetriggert und liefert nach der Zeit t₁ ab der letzten Triggerung dasselbe Ausgangssignal, das es vor der ersten Triggerung besaß. Unter der Annahme eine Nachtriggerzeit von 2 Minuten, wie angegeben, wird somit das Verlassen des Sitzes nach genau 2 Minuten erkannt. Diese Nachtriggerzeit ist dabei so gewählt, daß bei einer Sitzbelegung innerhalb dieser Zeit stets eine Änderung des Ausgangssignals für das Sensorkabel 5 auftritt. Die Ursache hierfür sind, wie bereits angegeben, bewußte oder unbewußte Bewegungen der sitzenden Person auf der Sitzoberfläche, die innerhalb dieser Zeit stets vorliegen. Es ist ohne weiteres zu erkennen, daß Alterungseinflüsse in Form beispielsweise nachlassender Elastizität des Sitzkörpers bzw. der Sitzfedern ebenso ohne Auswirkungen auf die Information einer Sitzbelegung sind wie der mögliche Verlust eines einzelnen Nachtriggersignals für das Monoflop M. Dabei kann durch die Festlegung der Schwelle in der Aufbereitungsstufe A und durch die Einstellung der Nachtriggerzeit t₁ die Empfindlichkeit der gesamten Schalteinrichtung gewählt werden.

## Patentansprüche

1. Sitzbelegungs-Schalteinrichtung für Kraftfahrzeuge, mit einem auf eine Sitzbelegung ansprechenden Sensor und mit einer zugehörigen Auswerte-Schaltung, die bei einer Sitzbelegung ein Signal abgibt, dadurch gekennzeichnet, daß der Sensor ein im Bereich der Sitzoberfläche angeordnetes, querkraftempfindliches Kabel ist und daß die Auswerte-Schaltung jede Änderung des Sensorausgangssignals als Sitzbelegungs-Information registriert.

2. Schalteinrichtung nach Anspruch 1, dadurch gekennzeichnet, daß das Kabel bevorzugt an den Stellen der Sitzoberfläche angeordnet ist, die der größten Beanspruchung ausgesetzt sind.

3. Schalteinrichtung nach Anspruch 1 oder 2, dadurch gekennzeichnet, daß das Kabel in den Sitzkörper eingeschäumt ist.

4. Schalteinrichtung nach einem der Ansprüche 1 bis 3, dadurch gekennzeichnet, daß das Kabel einen piezoelektrischen Wirkstoff enthält.

## Claims

1. A seat occupation switching device for motor vehicles, comprising a sensor which responds to seat occupation and an associated evaluating circuit which delivers a signal when a seat is occupied, characterised in that the sensor is a cable disposed in the region of the seat surface and sensitive to transverse force, and the evaluating circuit registers any change in the sensor output signal as showing whether a seat is occupied.

2. A switching device according to claim 1, characterised in that the cable is preferably disposed at those regions of the seat surface exposed to the greatest stress.

3. A switching device according to claim 1 or 2, characterised in that the cable is embedded in foam in the seat member.

4. A switching device according to any of claims 1 to 3, characterised in that the cable contains a piezoelectric active substance.

## Revendications

1. Dispositif de surveillance de l'occupation d'un siège de véhicules automobiles avec un détecteur réagissant à l'occupation du siège et avec un circuit d'exploitation correspondant qui délivre un signal lors d'une occupation du siège, dispositif de surveillance caractérisé en ce que le détecteur est un câble disposé dans la zone de la surface du siège, câble sensible à l'effort tranchant, et en ce que le circuit d'exploitation enregistre toute modification du signal de sortie du détecteur comme information relative à l'occupation du siège.

2. Dispositif de surveillance selon la revendication 1, caractérisé en ce que le câble est disposé de préférence aux endroits de la surface du siège qui sont soumis aux plus grandes sollicitations.

3. Dispositif de surveillance selon la revendication 1 ou 2, caractérisé en ce que le câble est enrobé dans la mousse du corps de siège.

4. Dispositif de surveillance selon l'une des revendications 1 à 3, caractérisé en ce que le câble contient une matière active piézo-électrique.
